# EUROPEAN PATENT APPLICATION

(11) **EP 1 886 882 A1**
(43) Date of publication of application: **13.02.2008**
(21) Application number: 07014197.3
(22) Date of filing: 19.07.2007
(51) Int. Cl.: B60R 21/0136, B60R 21/00, B60R 21/013

(54) **Displacement information deriving device, occupant restraint system, vehicle, and displacement information deriving method**

(30) Priority: 02.08.2006 JP 2006211330
(71) Applicant: TAKATA CORPORATION, Minato-ku, Tokyo 106-8510 (JP)
(72) Inventor: Aoki, Hiroshi, Tokyo 106-8510 (JP)
(74) Representative: Banzer, Hans-Jörg

(57) **Abstract**

In order to provide a technology, relating to detection of information about displacement of a vehicle component during a vehicle collision, which is effective for improving the detection characteristics, a collision detecting device (130) which is installed in a vehicle (200) comprises a coil sensor (131) provided with a plurality of detecting sections having different distances relative to a door outer panel (12), respectively, in a direction perpendicular to the extending direction of the door outer panel (12).

## Description

### Technical Field of the Invention

The present invention relates to a technology for deriving information about displacement of a vehicle component.

### Background of the Invention

Conventionally, there are known various vehicle collision sensors for detecting occurrence of a collision in the event of a vehicle accident. For example, disclosed in JP-A-05-45372 is an arrangement of employing a structure of cancelling insulation between two electric conductors so as to establish electric continuity therebetween when a vehicle side door is subjected to an impact exceeding a certain value in the event of a vehicle lateral collision, thus sensing occurrence of a collision on the vehicle side door as an electric signal.

### Problems to be solved by the Invention

By the way, in a structure for restraining a vehicle occupant in the event of a vehicle collision by an occupant restraint system such as an airbag, there is a high demand for technology for improving the occupant restraining capability. For this, it is highly requested to develop an effective sensor for improving detection capability in order to rapidly and securely detect occurrence of a vehicle collision.

The present invention is made in view of the aforementioned point and it is an object of the present invention to provide a technology, relating to detection of information about displacement of a vehicle component during a vehicle collision, which is effective for improving the detection characteristics.

### Means to solve the Problems

According to the present invention, this object is achieved by a displacement information deriving device as defined in claim 1, an occupant restraint system as defined in claim 4, a vehicle as defined in claim 6, and a displacement derivation method as defined in claim 7. The dependent claims define preferred and advantageous embodiments of the invention.

For achieving the object, the present invention is configured. Though the present invention is typically adapted to a technology for deriving information about displacement of a vehicle component in an automobile, the present invention can be also adapted to a technology for deriving information about displacement of a vehicle component in a vehicle other than the automobile. The "vehicle" used here includes various vehicles such as an automobile, airplane, a boat, a train, a bus, and a truck.

According to a first aspect of the present invention for achieving the aforementioned object a displacement information deriving device is provided.

The displacement information deriving device is a device for detecting information about a metallic vehicle component which is displaced by a vehicle collision and comprises at least a coil, a coil sensor, and a deriving unit. The "vehicle collision" used here widely includes a lateral collision, a frontal collision (full-wrap collision, offset collision, pole frontal collision, oblique collision), a rear collision, a rollover, and the like.

The coil of this invention is structured as a coil to be arranged to face the vehicle component. The vehicle component extends in a predetermined direction and can be displaced in a direction perpendicular to the extending direction by a vehicle collision. The "vehicle component" used here is a member composing the vehicle of which all or a part is a conductive member or a magnetic member containing, for example, steel, copper, aluminum, and/or ferrite. The vehicle component is typically a metallic outer panel (door panel (door skin), front panel, rear panel, hood panel, trunk panel and so on) forming the outer shell of the vehicle which is directly involved with the vehicle collision.

The coil sensor of this invention applies an AC magnetic field to the vehicle component when the coil is energized with alternative current and has a function of detecting impedance (sometimes called "AC impedance") through the coil when energized. That is, the coil sensor is structured as a coil sensor having two functional sections: i.e. an exciting section for applying an AC magnetic field to the vehicle component when the coil is energized with alternative current and a detecting section for detecting impedance when energized through the coil. Therefore, the coil itself of this invention substantially composes a coil sensor having the exciting section and the detecting section.

Specifically, when the coil is energized with alternative current and an AC magnetic field is applied to the vehicle component near the coil, an eddy current is produced on the vehicle component by the law of electromagnetic induction. The eddy current still produces a magnetic field and a part of the magnetic field intersects with the coil. As a result, the magnetic flux by the eddy current flowing through the vehicle component is added to the magnetic flux by the current supplied from an AC power source. By these magnetic fluxes, an induced voltage is produced in the coil. The ratio of the voltage produced in the coil relative to the current flowing through the coil is represented as AC impedance of the coil. As a result, the AC impedance is varied by bringing the vehicle component close to the coil (coil sensor). The variation in AC impedance is detected by continuously or periodically detecting the AC impedance of the coil through the coil.

The deriving unit of this invention has a function of deriving information about displacement of the vehicle component based on variations in impedance detected when the vehicle component is displaced toward the coil sensor in the event of a vehicle collision. Therefore, information about displacement of the vehicle component during the vehicle collision is derived by the deriving unit. Specifically, the deriving unit has a storing function and a computing function. Therefore, the deriving unit previously store relations between the variations in AC impedance and the displacement of the vehicle component and conducts computation of comparing the variations in AC impedance, actually detected through the coil sensor, to the stored relations, thereby deriving information about displacement of the vehicle component. The "information about displacement of the vehicle component" used here may be displacement distance, displacement speed, displacement acceleration, or the like.

In this invention, the coil sensor is structured to have at least a setting mode in which a plurality of detecting sections are formed to have different distances relative to the vehicle component, respectively, in a direction perpendicular to the extending direction of the vehicle component. In this invention, the coil sensor may have an integral structure in which the plurality of detecting sections are integrated or a separate structure in which the plurality of detecting sections are separated.

It is known that, in case of a coil sensor having a constant distance between the vehicle component and the detecting sections, the detection characteristics are different between a state that the vehicle component is relatively far apart from the coil sensor and a state that the vehicle component is relatively near the coil sensor. Specifically, variation rate in AC impedance are not in simple proportion to the distance between the vehicle component and the detecting sections. The variation rate is increased as the vehicle component comes closer to the coil sensor and is rapidly increased at the adjacent position. Accordingly, there is a limitation in easily and precisely detecting information about displacement of the vehicle component. To solve this problem, the coil sensor of this invention is set to have the plurality of detecting sections having different distances relative to the vehicle component, respectively, in the direction perpendicular to the extending direction of the vehicle component.

According to this arrangement, the plurality of detecting sections are arranged over a range from a spaced-apart position where the distance between the vehicle component and the coil sensor is relatively long to an adjacent position where the distance between the vehicle component and the coil sensor is relatively short, the gradually increased intensity of detection of the vehicle component is obtained by arranging the plurality of detecting sections. Therefore, it is possible to obtain the detection characteristics which are stabilized over a wide range and are linearized to have substantially constant variation in AC impedance relative to the distance between the vehicle component and the detecting sections. Therefore, this invention can provide the displacement information deriving device capable of improving detection characteristics for information about displacement of the vehicle component. This invention provides further effect of ensuring the improved detection sensitivity without increase in size of the coil sensor, thereby ensuring compatibility between the miniaturization and improvement of detection sensitivity of the coil sensor.

The information about displacement of the vehicle component, derived by the deriving unit of this invention, may be suitably used for controlling an occupant restraint device such as an airbag device and a seat belt device which is activated to restrain a vehicle occupant in the event of a vehicle collision, for controlling a warning device for outputting warning such as display and sound for informing of the vehicle collision, and for controlling another object to be controlled. Typically, such an arrangement may be employed that a control signal is outputted to an airbag device and/or a seat belt device when it is determined that a vehicle collision actually occurs based on the information about displacement of the vehicle component.

According to a preferred embodiment, in the displacement information deriving device, the coil sensor further has a second setting mode. In the second setting mode, the distances between the vehicle component and the detecting sections are made constant when the vehicle component comes closer to the coil sensor.

According to this arrangement, at an adjacent position where the vehicle component is relatively closer to the coil sensor, it is possible to prevent rapid increase in variation of AC impedance relative to the distance between the vehicle component and the detecting sections, thereby effectively obtaining the detection characteristics which are linearized to have further constant variation in AC impedance. Therefore, this invention can provide the displacement information deriving device with further improved detection characteristics of information about displacement of the vehicle component.

According to another preferred embodiment, in the displacement information deriving device, the coil sensor has an integral structure having the plurality of detecting sections arranged on a sensor surface thereof in a slant. That is, in this embodiment, the distances between the detecting sections composing the slant plane of the coil sensor and the vehicle component are different from each other. This arrangement can provide the displacement information deriving device of which the coil sensor has a simplified structure.

According to a second aspect of the invention, an occupant restraint system comprises at least a displacement information deriving device as defined above, an occupant restraint device, and a control device.

The occupant restraint device of this invention is structured as a means for restraining a vehicle occupant during a vehicle collision. The "occupant restraint device" used here includes occupant restraint devices such as an airbag device (airbag module) and a seat belt device.

The control device of this invention is structured as a device at least having a function of controlling the occupant restraint device according to the information derived by the deriving unit, i.e. the information about displacement of the vehicle component. Typically, such an arrangement may be employed that a control signal is outputted to an airbag device and/or a seat belt device when it is determined that a vehicle collision actually occurs according to the information about displacement of the vehicle component. Alternatively, such an arrangement may be employed that the impact energy at occurrence of collision is estimated based on the information about displacement of the vehicle component and the occupant restraint mode in the airbag device and/or the seat belt device is changed according to the estimated impact energy. The control device may be exclusively used for controlling the occupant restraint device or may be used also for controlling the actuation of an engine/running system and an electrical system.

According to this arrangement, the occupant restraint device is controlled using highly precise information about displacement of the vehicle component obtained by the displacement information deriving device, thereby ensuring complete restraint of the vehicle occupant.

According to a preferred embodiment, in the occupant restraint system, the coil of the displacement information deriving device is arranged to face a door outer panel of a vehicle door as the vehicle component. The occupant restraint device is adapted to restrain the vehicle occupant in the event of a lateral vehicle collision. In this case, when an airbag device is used as the occupant restraint device, an airbag device of which airbag is accommodated in a seat, a pillar, or an upper roof rail may be employed. According to this arrangement, complete restraint of the vehicle occupant in the event of a vehicle lateral collision is ensured.

According to a third aspect of the invention, a vehicle comprises an engine/running system; an electrical system; an actuation control device, a vehicle component, a sensor device, and a control signal output device.

The engine/running system is a system involving an engine and a running mechanism of the vehicle. The electrical system is a system involving electrical parts used in the vehicle. The actuation control device is a device having a function of conducting the actuation control of the engine/running system and the electrical system. The vehicle component is a metallic member which composes the vehicle and can be deformed by a vehicle collision. The vehicle component may be an outer panel (door panel), front panel, rear panel, hood panel, trunk panel and so on) which is made of a metal (metal containing, for example, steel, copper, aluminum, and/or ferrite) and forms the outer shell of the vehicle. The sensor device is structured as a device having a function of deriving information about displacement of the vehicle component.

According to this aspect, the sensor device comprises a displacement information deriving device as defined above. The control signal output device is structured as a device having a function of outputting a control signal to the object to be controlled according to the information derived by the sensor device. The "object to be controlled" used here includes an occupant restraint device such as an airbag device and a seat belt device which is activated to restrain a vehicle occupant in the event of a vehicle collision and a warning device for outputting warning such as display and sound for informing of the vehicle collision. The control signal output device may be exclusively used for control of the occupant restraint device or may be used also as an actuation control device for controlling the actuation of an engine/running system and an electrical system.

This arrangement can provide a vehicle in which highly precise information about displacement of the vehicle component obtained by the displacement information deriving device is used for controlling a variety of objects to be controlled about the vehicle.

According to a fourth aspect of the invention for achieving the aforementioned object a displacement information deriving method is provided.

In the displacement information deriving method, a coil is used which is arranged to face a metallic vehicle component which extends in a predetermined extending direction and can be displaced in a direction perpendicular to the extending direction by a vehicle collision, wherein the coil is provided with a plurality of detecting sections having different distances relative to the vehicle component, respectively, in the direction perpendicular to the extending direction of the vehicle component. Then, the coil is energized to apply an AC magnetic field to the vehicle component and variation in impedance when the vehicle component is displaced toward the detecting sections during a vehicle collision is detected through the coil. Therefore, detection characteristics which are linearized to have substantially constant variation in impedance relative to the distance between the vehicle component and the detecting sections are obtained. In addition, information about displacement of the vehicle component is derived according to the detection characteristics. For conducting this method, the displacement information deriving device as defined above can be substantially used.

Therefore, this method enables improvement of detection characteristics of information about displacement of the vehicle component during a vehicle collision.

### Effects of the Invention

As described in the above, the present invention relates to a technology for energizing a coil which is arranged to face a metallic vehicle component to apply an AC magnetic field to the vehicle component and detecting impedance when energized, and employs an arrangement that a plurality of detecting sections having different distances relative to the vehicle component in a direction perpendicular to the extending direction of the vehicle component are formed, thereby enabling improvement of detection characteristics of information about displacement of the vehicle component during a vehicle collision.

### Brief Explanation of the drawings

The invention will now be described in more detail with reference to the accompanying drawings, in which:
Fig. 1 is an illustration schematically showing an occupant restraint system 100 of an embodiment in a state installed in a subject vehicle 200.
Fig. 2 is an illustration showing a schematic structure of a collision detecting device 130 shown in Fig. 1.
Fig. 3 is an illustration showing a structure in section of a vehicle door 10 in the embodiment, illustrating an installed example of a coil sensor 131.
Fig. 4 is an illustration showing the structure in section of the vehicle door 10 of the embodiment for explaining the motion of the coil sensor 131 during a door outer panel 12 of a vehicle door 10 is deformed by a lateral collision of the subject vehicle 200.
Fig. 5 is an illustration showing the structure in section of the vehicle door 10 of the embodiment for explaining the motion of the coil sensor 131 during a door outer panel 12 of a vehicle door 10 is deformed by a lateral collision of the subject vehicle 200.
Fig. 6 shows graphs showing relations of Q values and I values relative to the distance "d" between the coil sensor 131 and the door outer panel 12.
Fig. 7 is an illustration showing another embodiment as for the installation of the coil sensor 131 shown in Fig. 3.
Fig. 8 is an illustration showing another embodiment as for the installation of the coil sensor 131 shown in Fig. 3.

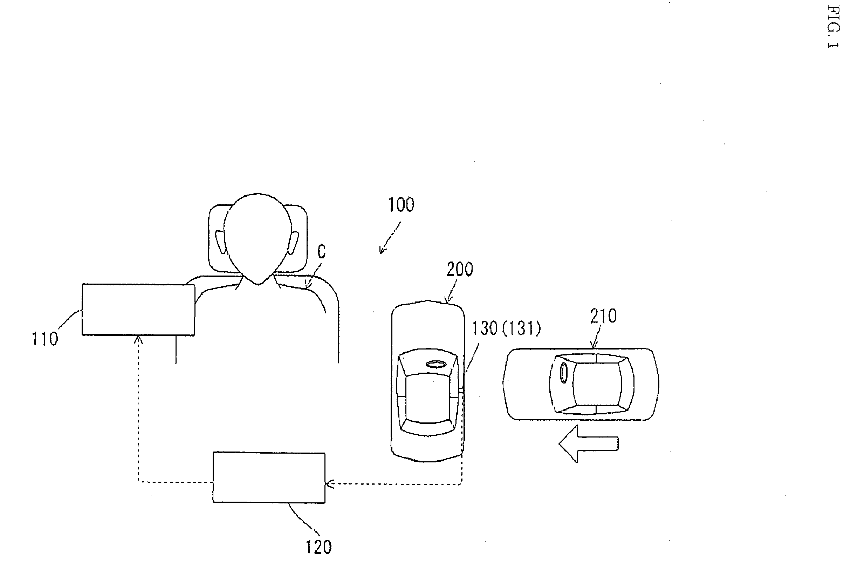

Hereinafter, description will be made as regard to an occupant restraint system 100 as an embodiment of "occupant restraint system" of the present invention with reference to Fig. 1 through Fig. 6. This embodiment employs an airbag module with a deployable airbag as the occupant restraint system implementing occupant restraint. Though the airbag module used for a vehicle occupant (driver) on a vehicle seat on a right side in a vehicle cabin is described in this embodiment, the airbag module of this embodiment may be adapted to an airbag module for an occupant on any vehicle seat such as a driver's seat, a front passenger seat, and a rear seat.

The configuration of an occupant restraint system 100 of this embodiment, which is installed in a subject vehicle 200, of this embodiment is schematically shown in Fig. 1. As will be described in detail later, a collision detecting device 130 composing the occupant restraint system 100 is installed in a vehicle door which is opened and closed for allowing a vehicle occupant C to get in or out the vehicle in this embodiment. Besides the collision detecting device 130 of the occupant restraint system 100, another detecting device and/or another occupant restraint system may be installed in a vehicle-side member such as a trim or a pillar.

As shown in Fig. 1, the subject vehicle 200 as the "vehicle" of the present invention comprises a number of vehicle components composing the vehicle, an engine/running system involving an engine and a running mechanism of the vehicle, an electrical system involving electrical parts used in the vehicle, and an actuation control means for conducting the actuation control of the engine/running system and the electrical system. Particularly in this embodiment, the occupant restraint system 100 is installed in the subject vehicle 200.

The occupant restraint system 100 is an apparatus having a function of protecting the vehicle occupant C on the vehicle seat in the event of a vehicle accident such as a lateral collision (for example, a collision with another vehicle 210 from a lateral side) or a rollover of the subject vehicle 200. The occupant restraint system 100 comprises at least: an airbag module 110, a control unit (ECU) 120, and the collision detecting device 130.

The airbag module 110 comprises at least an airbag and a gas generator, but not shown. The airbag is expandable and is adapted to be deployed into an occupant restraint area with gas supplied from the gas generator when a vehicle accident occurs. The airbag module 110 corresponds to the "occupant restraint apparatus" and/or "object to be controlled" of the present invention.

The control unit 120 is composed of a CPU (central processing unit), an input/output unit, a storage unit, a driving unit, a peripheral unit, and the like, but not shown. In this embodiment, the control unit 120 is electrically connected to the airbag module 110 to conduct transmission of detection signals and control signals therebetween. Especially, an input signal to be inputted into the control unit 120 is detection information (detection signal) detected by the collision detecting device 130. The control unit 120 outputs a control signal to the airbag module 110 based on the input signal from the collision detecting device 130. The control unit 120 corresponds to the "control device" and/or "control signal output device" of the present invention.

The control unit 120 may be used exclusively for the control of the occupant restraint system 100 or may be used also for the control of another vehicle component and/or the control of the entire vehicle besides the control of the occupant restraint system 100.

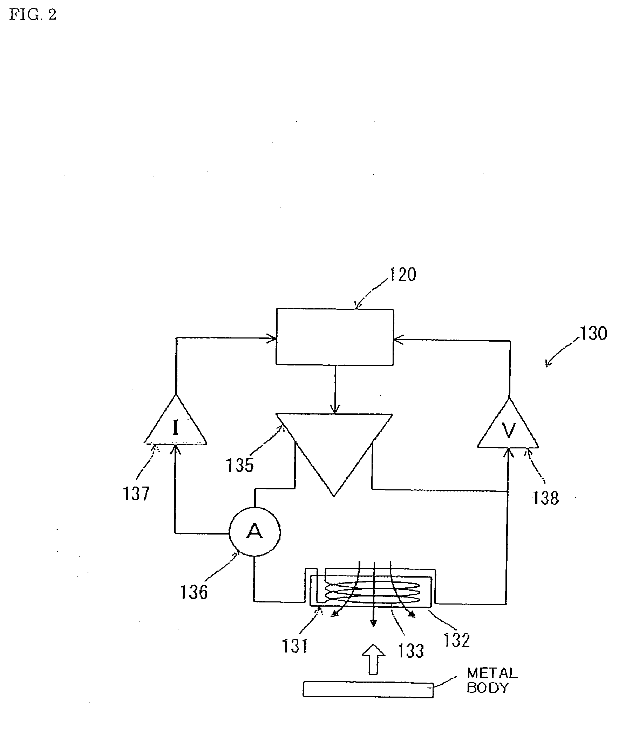

Here, a driving circuit of the collision detecting device 130 in Fig. 1 is shown in Fig. 2.

As shown in Fig. 2, the collision detecting device 130 comprises at least: a coil sensor 131, a holding member 134 as will be described later, an AC power source unit 135, an ammeter 136, a current output unit 137, and a voltage output unit 138. The coil sensor 131 comprises a coil 133 which is formed by winding a wire into a circle several times and which is accommodated in a sensor housing 132. The coil 133 corresponds to the "coil" of the present invention and the coil sensor corresponds to the "coil sensor" of the present invention. The AC power source unit 135 is a unit for supplying alternative current to the coil 133 of the coil sensor 131 according to the control signal from the control unit 120. The ammeter 136 has a function of detecting current flowing through the coil 133. The current output unit 137 has a function of detecting information about variation in current (phase and amplitude) flowing through the coil 133 and the voltage output unit 138 has a function of detecting information about variation in voltage (phase and amplitude) in the coil 133.

The collision detecting device 130 corresponds to the "displacement information deriving device" and/or "sensor device" of the present invention.

In the collision detecting device 130 having the aforementioned structure, when the coil 133 is energized with alternative current by the activation of the AC power source unit 135 and an AC magnetic field is applied to a metal body (conductive body or magnetic body) near the coil 133, an eddy current is produced on the metal body by the law of electromagnetic induction. The eddy current still produces a magnetic field and a part of the magnetic field intersects with the coil 133. As a result, the magnetic flux by the eddy current flowing through the metal body is added to the magnetic flux by the current supplied from the AC power source unit 135. By these magnetic fluxes, an induced voltage is produced in the coil 133. The ratio of the voltage produced in the coil relative to the current flowing through the coil 133 is represented as AC impedance of the coil 133. As a result, the AC impedance is varied by bringing the metal body close to the coil 133. The variation in AC impedance is detected by continuously or periodically detecting the AC impedance of the coil 133 through the coil 133. In this embodiment, therefore, the coil 133 itself substantially composes the coil sensor 131 having an exciting section and a detecting section so that the variation in AC impedance detected by the detecting section is detected through the current output unit 137 and the voltage output unit 138.

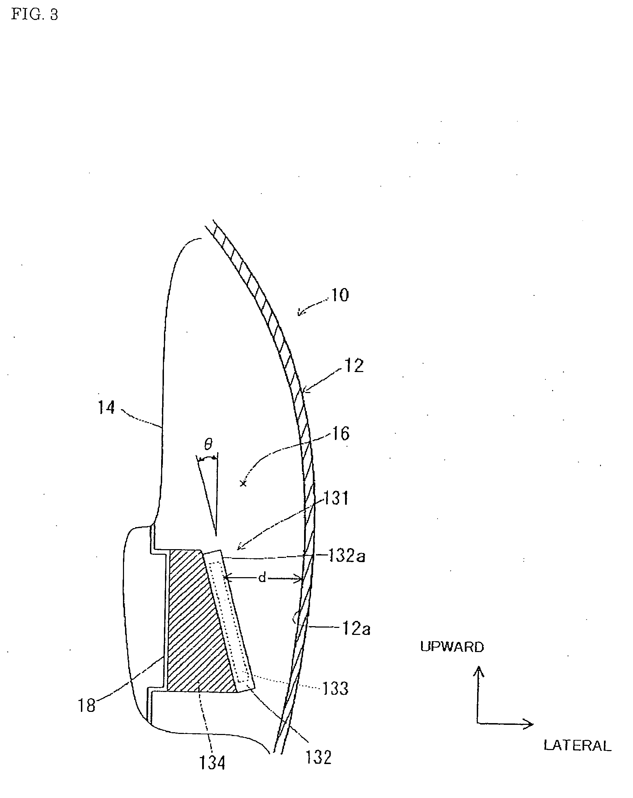

An installed example of the coil sensor 131 of the collision detecting device 130 having the aforementioned structure will be described with reference to Fig. 3. Fig. 3 is an illustration showing a structure of a vehicle door 10 in section, illustrating an installed example of the coil sensor 131.

As shown in Fig. 3, the vehicle door 10 for allowing a vehicle occupant C to get in or get out the vehicle is provided with the coil sensor 131 in a space 16 formed between a door outer panel (sometimes called "door skin") 12 which is made of a metal sheet composing an outer wall of the vehicle and a door inner panel 14 composing an inner wall of the vehicle. Specifically, a bracket 18 is provided on a surface of the door inner panel 14 facing the space 16 and the coil sensor 131 is held by the bracket 18 via a holding member 134. The holding member 134 is formed from an elastic material such as sponge or urethane. In the state shown in Fig. 3, the coil sensor 131 (the coil 133) is arranged to face the door outer panel 12 as an object to be detected by the coil sensor 131. The door outer panel 12 is formed as a conductive member or a magnetic member containing, for example, steel, aluminum, and/or ferrite. The door outer panel 12 corresponds to the "metallic vehicle component which extends in a predetermined extending direction and can be displaced in a direction perpendicular to the extending direction by a vehicle collision" of the present invention.

In this embodiment, the coil sensor 131 comprising the coil 133 accommodated in the sensor housing 132 has an integral structure to have a plurality of detecting sections which are arranged on the sensor surface 132a. Further, the coil sensor 131 is structured such that the coil extending surface or the coil plane (actually the sensor surface 132a of the sensor housing 132) of the coil 133 is inclined by an inclination angle θ relative to the extending direction of an inner surface 12a of the door outer panel 12 as the metal member. Specifically, the coil sensor 131 is held on a slant by the holding member 134 in a state arranged at a position where is rotated by an angle θ in the counter-clockwise direction from the vertically standing state of the coil sensor 131 in Fig. 3. Therefore, a structure in which a plurality of detecting sections are arranged on a slant on the sensor surface 132a of the coil sensor 131 is achieved. The angle θ is preferably changed according to the installation location of the coil sensor 131 and the surface configuration of the object to be detected.

By this structure of the coil sensor 131, the distance "d" between the inner surface 12a of the door outer panel 12 and the coil 133 is gradually reduced in the downward direction. That is, as for the direction of displacement (movement) of the door outer panel 12 in the event of a vehicle accident, the distance "d" between the inner surface 12a of the door outer panel 12 and the coil 133 is not constant with regard to the vertical direction. This means that a plurality of detecting parts of which the distances "d" are different from each other are formed on the sensor surface 132a. This first setting mode (setting state) of the coil sensor 131 corresponds to the "setting mode" of the present invention. In the first setting mode, variations in AC impedance during the displacement of the door outer panel 12 are detected by some of the detecting sections of the coil 133 having different distances relative to the door outer panel 12 respectively.

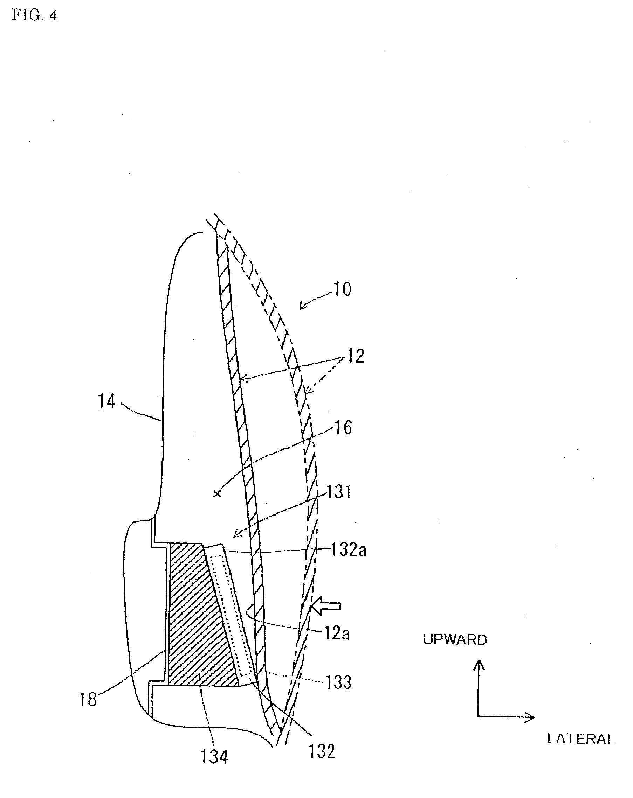

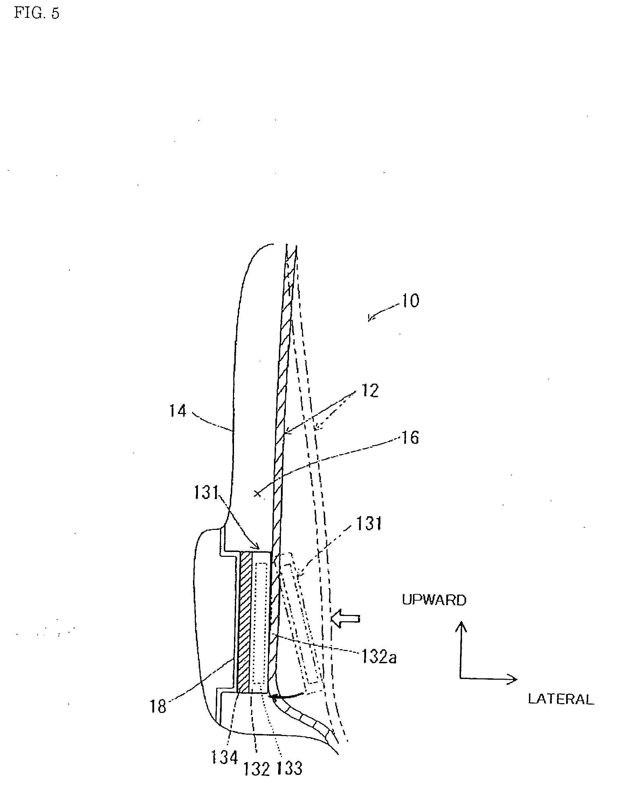

The motion and function of the coil sensor 131 will be described with reference to Fig. 4 and Fig. 5 in addition to Fig. 3. Fig. 4 and Fig. 5 are illustrations both showing the structure of the vehicle door 10 in section for explaining the motion of the coil sensor 131 during the door outer panel 12 of the vehicle door 10 is deformed by a lateral collision of the subject vehicle 200.

The following description will be made as regard to a case that the door outer panel 12 of the vehicle door 10 shown in Fig. 3 is subjected to an impact in a lateral direction (from the right side in Fig. 3) by a vehicle collision (a lateral collision of the subject vehicle 200 with another vehicle 210 as shown in Fig. 1) so that the door outer panel 12 is displaced (sometimes called "deformed" or "moved") toward the coil sensor 131. In this case, the door outer panel 12 shown in Fig. 3 comes to a state shown in Fig. 5 through a state shown in Fig. 4, for example.

The state shown in Fig. 4 is that the door outer panel 12 is displaced from a position shown by two-dot chain lines to a position shown by solid lines so that a part of the door outer panel 12 facing the coil sensor 131 comes in contact with a lower end of the coil sensor 131. The coil sensor 131 is maintained in the first setting mode during the process from the state shown in Fig. 3 to the state shown in Fig. 4. Therefore, variations in AC impedance during the displacement of the door outer panel 12 are detected continuously by some detecting sections having different distances relative to the door outer panel 12.

On the other hand, the state shown in Fig. 5 is that the door outer panel 12 is further displaced from a position shown by two-dot chain lines to a position shown by solid lines so that a part of the door outer panel 12 facing the coil sensor 131 presses the coil sensor 131 toward the inside of the vehicle cabin (toward the left in figure) to flatten the holding member 134. During the process to the state shown in Fig. 5, the coil sensor 131 held on a slant by the holding member 134 is rotated and displaced in the direction shown by an arrow from a position shown by two-dot chain lines to a position shown solid lines in Fig. 5 to press the holding member 134 so that the coil sensor 131 is set to a substantially vertically standing state. Accordingly, the distance "d" between the inner surface 12a of the door outer panel 12 and the coil 133 is substantially constant (evened) in the vertical direction. This second setting mode (setting state) of the coil sensor 131 corresponds to the "second setting mode" of the present invention. In the second setting mode, variations in AC impedance during the displacement of the door outer panel 12 are detected by some of the detecting sections of the coil 133 having substantially equal distance relative to the door outer panel 12.

When the door outer panel 12 is displaced from the state shown in Fig. 3 to the state shown in Fig. 5, variations in AC impedance are detected by the coil sensor 131 continuously or periodically and are processed by the control unit 120. Based on the information about variations in AC impedance, information about displacement of the door outer panel 12 is derived. Specifically, the control unit 120 previously stores relations between the variations in AC impedance and the displacement of the door outer panel 12 and compares the detected variations in AC impedance to the stored relations, thereby deriving information about displacement of the door outer panel 12. As the information about displacement of the door outer panel 12, displacement distance, displacement speed, and displacement acceleration may be suitably used. The "deriving unit" of the present invention is composed of the control unit 120 which derives information about displacement of the door outer panel 12.

Based on the derived information about displacement of the door outer panel 12, information about a lateral collision of the subject vehicle 200 is derived. Based on the derived information about the lateral collision, the airbag module 110 is controlled. As the information about the lateral collision, information whether or not the lateral collision actually occurred, and information about impact energy at the lateral collision may be suitably used. According to this control, the airbag of the airbag module 110 is inflated and deployed, whereby the airbag absorbs the impact energy acting on a side (the head, the neck, the shoulder, the chest, the abdomen, the knee, the lower limb) of the vehicle occupant (the vehicle occupant C in Fig. 1) and restrains the vehicle occupant.

For deriving information about the collision of the subject vehicle 200, information detected by another sensor may be used in addition to the information detected by the coil sensor 131. As the another sensor, for example, an acceleration sensor for detecting acceleration acting on the subject vehicle 200 in three directions (X-axial, Y-axial, Z axial directions) may be used.

It is known that, in case that the object such as the door outer panel 12 is detected by a coil sensor having a conventional structure, the detection characteristics are different between a state that the object is relatively far apart from the coil sensor and a state that the object is relatively near the coil sensor. Specifically, variation rate in AC impedance are not in simple proportion to the distance between the coil sensor and the object. The variation rate is increased as the object comes closer to the coil sensor and is rapidly increased at the adjacent position. Accordingly, the conventional one has a limitation in easily and precisely detecting information about displacement of the object. Therefore, the inventors of this invention have keenly studied about the structure of this type of sensors in order to obtain such detection characteristics that the variation rate in AC impedance is substantially proportional to the distance between the coil sensor 131 and the door outer panel 12. As a result, the inventors found a solution of obtaining desired detection characteristics for deriving information about displacement of the door outer panel 12 by setting the coil sensor 131 in the first and second setting modes as mentioned above.

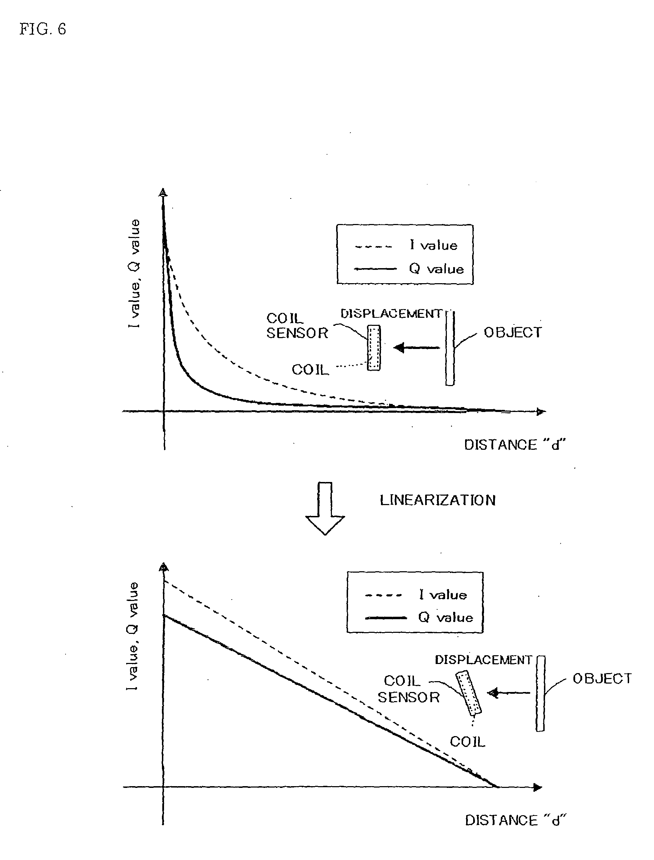

As for the detection characteristics of the coil sensor 131, the outline of installation of the coil sensor is shown in Fig. 6, comparing a case before improvement and a case after the improvement. Fig. 6 shows relations of Q values and I values relative to the distance "d" between the coil sensor 131 and the door outer panel 12. The Q value used here is defined as a value reflecting the phase relation of the current and voltage flowing through the coil 133 of the coil sensor 131 and the I value used here is defined as a value reflecting amplitude information during detection.

In Fig. 6, characteristics in the upper graph of Fig. 6 are obtained when the coil sensor is arranged to have constant distance between the coil sensor and the object and conducts the detection of the object, while characteristics in the lower graph of Fig. 6 are obtained when the coil sensor is arranged to have distances between the coil sensor and the object which are different in the vertical direction like this embodiment and conducts the detection of the object. That is, since the plurality of detecting sections are arranged over a range from a spaced-apart position where the distance between the door outer panel 12 and the coil sensor 131 is relatively long to an adjacent position where the distance between the door outer panel 12 and the coil sensor 131 is relatively short, the gradually increased intensity of detection of the door outer panel 12 is obtained by arranging the plurality of detecting sections. Therefore, it is possible to obtain the detection characteristics which are linearized to have substantially constant variation in AC impedance relative to the distance between the door outer panel 12 and the detecting sections. Further, by setting the coil sensor in the second setting mode following the first setting mode, it is possible to prevent rapid increase in variation of AC impedance relative to the distance between the door outer panel 12 and the detecting sections, thereby effectively obtaining the detection characteristics which are linearized to have further constant variation in AC impedance.

As mentioned above, this embodiment provides the collision detecting device 130 and the collision detecting method which can improve the detection characteristics of detecting the displacement of the door outer panel 12. Specifically, the detection characteristics of the door outer panel 12 by the coil sensor 131 can be stabilized over the range from the spaced-apart position where the distance between the door outer panel 12 and the coil sensor 131 is relatively long to the adjacent position where the distance between the door outer panel 12 and the coil sensor 131 is relatively short. This embodiment provides further effect of ensuring the improved detection sensitivity without increase in size of the coil sensor 131, thereby ensuring compatibility between the miniaturization and improvement of detection sensitivity of the coil sensor 131. The structure, that the plurality of detecting sections having different distances between the coil sensor 131 and the door outer panel 12 are formed by arranging the integrated coil sensor 131 on a slant, enables to provide the collision detecting device 130 having simple structure of the coil sensor 131.

According to this embodiment, the airbag module 110 is controlled using highly precise information about displacement of the door outer panel 12 obtained by the collision detecting device 130, thereby ensuring complete restraint of the vehicle occupant.

Further, according to this embodiment, a vehicle 200 in which highly precise information about displacement of the door outer panel 12 is used for controlling a variety of objects to be controlled about the vehicle.

### Another embodiment

The present invention is not limited to the aforementioned embodiment and various applications and modifications may be made. For example, the following respective embodiments based on the aforementioned embodiment may be carried out.

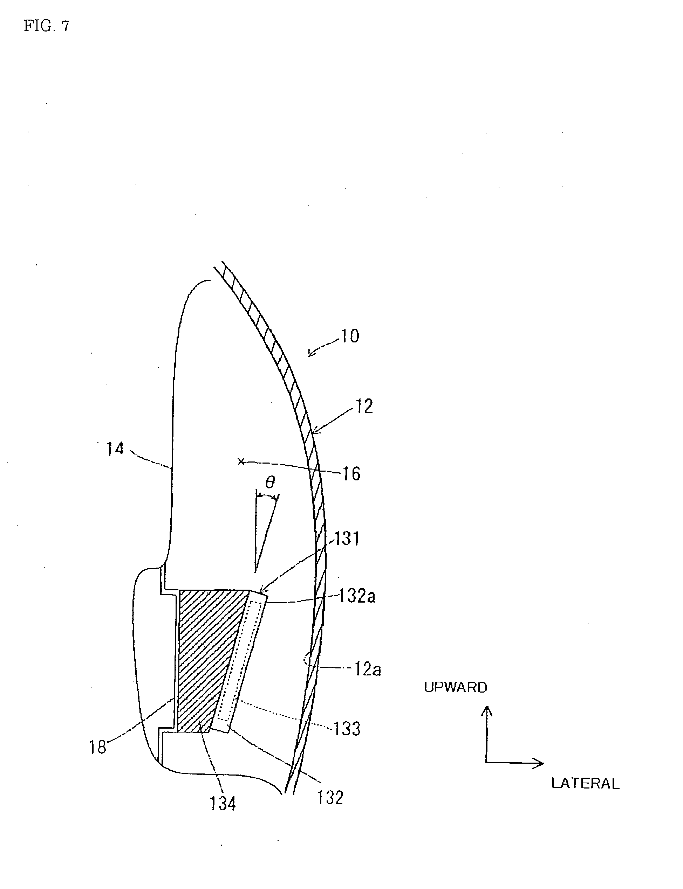

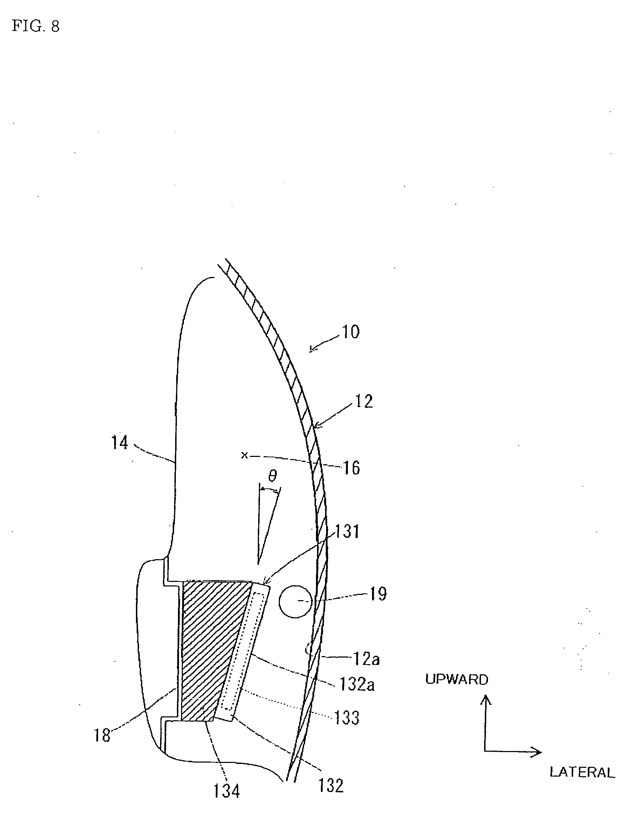

Though the aforementioned embodiment has been described with regard to a case that the coil sensor 131 is held on a slant by the holding member 134 in a state arranged at a position where is rotated by an angle θ in the counter-clockwise direction from the vertically standing state of the coil sensor 131 as shown in Fig. 3, in this invention the installation of the coil sensor 131 is not limited thereto and may be suitably changed if required. Here, Fig. 7 and Fig. 8 each show another embodiment as for the installation of the coil sensor 131 shown in Fig. 3.

In the embodiment shown in Fig. 7, the coil sensor 131 is held on a slant by the holding member 134 in a state arranged at a position where is rotated by an angle θ in the clockwise direction from the vertically standing state of the coil sensor 131. In this arrangement, when the door outer panel 12 is subjected to an impact in the lateral direction by a vehicle collision, a part of the door outer panel 12 facing the coil sensor 131 presses an upper end of the coil sensor 131 toward the inside of the vehicle (to the left in Fig. 7). Then, the entire coil sensor 131 is pressed by the door outer panel 12 so as to flatten the holding member 134, thus coming to the same state as shown in Fig. 5.

In the embodiment shown in Fig. 8, in addition to the structure of the arrangement shown in Fig. 7, a door beam 19 is disposed between the coil sensor 131 and the door outer panel 12. In this arrangement, when the door outer panel 12 is subjected to an impact in the lateral direction by a vehicle collision, the door outer panel 12 presses the door beam 19 toward the inside of the vehicle (to the left in Fig. 8) so that the pressed door beam 19 presses an upper end of the coil sensor 131 toward the inside of the vehicle. Then, the entire coil sensor 131 is further pressed by the door beam 19 and the door outer panel 12 so as to flatten the holding member 134, thus coming to the same state as shown in Fig. 5. The coil sensor 131 of the embodiment shown in Fig. 3 may employ an arrangement in which a door beam 19 as shown in Fig. 8 exists between the coil sensor 131 and the door outer panel 12.

As for the arrangement of the coil sensor 131, though the aforementioned embodiment has been described with regard to a case that a plurality of detecting sections having different distances "d" between the inner surface 12a of the door outer panel 12 and the coil 133 are formed in the sensor surface 132a by arranging the single coil 133 on a slant, in the present invention this arrangement may be achieved by using a plurality of coils having different distances relative to the door outer panel 12.

Though the aforementioned embodiment has been described with regard to a case that the coil sensor 131 has the first setting mode and the second setting mode, the present invention is effected as long as the coil sensor 131 has at least the first setting mode. Accordingly, the present invention may employ a coil sensor having only the first setting mode or a coil sensor having another setting mode in addition to the fist setting mode and the second setting mode.

Though the aforementioned embodiment has been described with regard to the collision detecting device 130 adapted for a technology for detecting occurrence of a lateral collision, in the present invention the arrangement of the collision detecting device 130 may be adapted for a technology for detecting occurrence of collision of various types. In this case, the installation location of the coil sensor 131 which is mounted in the vehicle door 10 may be changed according to the type of the vehicle collision.

Though the aforementioned embodiment has been described with regard to a case that the information about displacement of the door outer panel 12 is used for controlling the airbag module 110 which operates for restraining the vehicle occupant in the event of a vehicle collision, in the present invention the information about displacement of the door outer panel 12 may be used for controlling an occupant restraint device such as a seat belt device and a warning device for outputting warning such as display and sound.

Though the aforementioned embodiment has been described with regard to the collision detecting device 130 for detecting a lateral collision of a vehicle, the present invention may be adopted to a technology for detecting a vehicle collision other than the lateral collision, such as a frontal collision (full-wrap collision, offset collision, pole frontal collision, oblique collision), a rear collision, and a rollover.

Though the aforementioned embodiment has been described with regard to the arrangement of the vehicle occupant restraint system to be installed in an automobile, the present invention can be adopted to occupant restraint systems to be installed in various vehicles such as an automobile, an airplane, a boat, a train, a bus, a truck, and the like.

## Claims

1. A displacement information deriving device (130) comprising:
a coil (133) arranged to face a metallic vehicle component (12), wherein the vehicle component (12) extends in a predetermined extending direction and can be displaced in a direction perpendicular to the extending direction by a vehicle collision;
a coil sensor (131), wherein the coil sensor (131) applies an AC magnetic field to the vehicle component (12) when the coil is energized with alternative current, and the coil sensor (131) detects impedance when energized through the coil (133); and
a deriving unit (120) for deriving information about displacement of the vehicle component (12) based on variations in impedance detected when the vehicle component (12) is displaced toward the coil sensor (131) in the event of a vehicle collision, wherein
said coil sensor (131) has a setting mode in which a plurality of detecting sections are formed to have different distances (d) relative to the vehicle component (12), respectively, in a direction perpendicular to the extending direction of the vehicle component (12).

2. A displacement information deriving device (130) as claimed in claim 1, wherein
the coil sensor (131) has a second setting mode in which the distances (d) between the vehicle component (12) and the detecting sections are made constant when the vehicle component (12) comes closer to the coil sensor (131) from said setting mode.

3. A displacement information deriving device (130) as claimed in claim 1 or 2, wherein
the coil sensor (131) has an integral structure having the plurality of detecting sections arranged on a sensor surface (132a) thereof in a slant.

4. An occupant restraint system (100) comprising:
a displacement information deriving device (130) as claimed in any one of claims 1 through 3;
an occupant restraint device (110) for restraining a vehicle occupant (C) during a vehicle collision; and
a control device for controlling the occupant restraint device (110) according to the information derived by the deriving unit (120).

5. An occupant restraint system (100) as claimed in claim 4, wherein
the coil (133) of the displacement information deriving device (130) is arranged to face a door outer panel (12) of a vehicle door (10) as the vehicle component, and wherein
the occupant restraint device (110) is adapted to restrain the vehicle occupant (C) in the event of a lateral vehicle collision.

6. A vehicle (200) comprising: an engine/running system; an electrical system; an actuation control device for conducting the actuation control of the engine/running system and the electrical system; a metallic vehicle component (12) which can be displaced by a vehicle collision; a sensor device (130) for deriving information about displacement of the vehicle component (12); and a control signal output device (120) for outputting control signal to an object (110) to be controlled based on the information derived by the sensor device (130), wherein
the sensor device (130) comprises a displacement information deriving device (130) as claimed in any one of claims 1 through 3.

7. A displacement information deriving method comprising:
using a coil (133) which is arranged to face a metallic vehicle component (12) which extends in a predetermined extending direction and can be displaced in a direction perpendicular to the extending direction by a vehicle collision, wherein the coil (133) is provided with a plurality of detecting sections having different distances relative to the vehicle component (12), respectively, in the direction perpendicular to the extending direction of the vehicle component (12), and
energizing the coil (133) with alternative current to apply an AC magnetic field to the vehicle component (12) and detecting variation in impedance through the coil (133) when the vehicle component (12) is displaced toward the detecting sections during a vehicle collision, whereby
detection characteristics which are linearized to have substantially constant variation in impedance relative to the distance (d) between the vehicle component (12) and the detecting sections are obtained and information about displacement of the vehicle component (12) is derived according to the detection characteristics.

8. The method as claimed in claim 7, wherein the distance (d) between the vehicle component (12) and the detecting sections are made constant when the vehicle component (12) comes closer to the coil sensor (131).
